# EUROPEAN PATENT APPLICATION

(11) **EP 4 305 954 A1**
(43) Date of publication of application: **17.01.2024**
(21) Application number: 22184141.4
(22) Date of filing: 11.07.2022
(51) Int. Cl.: A01G 23/00

(54) **LOAD HEIGHT DETECTION SYSTEM AND METHOD**

(71) Applicant: Deere & Company, Moline, IL 61265 (US)
(72) Inventor: KANANOJA, TEEMU, 68163 Mannheim (DE)
(74) Representative: Lavall, Christian Henner

(57) **Abstract**

The invention concerns a load height detection system comprising a load space (20) a crane (22) comprising multiple booms and a boom tip, a grapple tool adapted to handle cargo, being attached to the boom tip, being adapted to provide sensor data for open/close status, the crane (22) adapted to detect a vertical slew angle, a rotational angle, at least a horizontal distance of the boom tip to the base of the crane (22) and a height position of the boom tip relative to the load space (20), a controller adapted to receive the positioning data of the crane (22) and the boom tip, the controller being adapted to interpret the data of the vertical slew angle, the rotational angle, the distance and the height data to identify if the boom tip is inside or outside the load space (20), and to identify a loading or an unloading operation by an increasing or decreasing boom tip height in the area of the load space (20) at a final position, the final position being defined by an open/close status of the grapple tool, and determining a fully loaded or fully unloaded load space (20).

## Description

The invention is a load height detection system for a load space provided on a vehicle, especially a forest vehicle for loading logs and a method for such a system.

Loading bulk cargo on a load space of utility vehicles, in particular forest vehicles, requires the operator to staple the cargo inside the load space until a fully loaded situation is achieved. On the technical field of forest vehicles, the operator and the vehicle controller are in constant communication with the production system to update productivity date and product flow throughout the forest area and the product flow. Operation of forest vehicles requires planning of the material flow from the harvesting or cutting to loading and transporting the material to a nearby road network and to deliver the material to further processing. Especially for loading logs forwarder vehicles are used which provide a bunk or load space for placing the felled and cut logs for transportation.

The operator is required to provide feedback when the load space is fully loaded or unloaded to enable proper planning of the workflow. The feedback can result in misleading information, such as load amount in weight or number of logs or wood type, as the operator must keep track on the required information and may make inaccurate inputs due to work stress or fatigue.

The invention aims to solve these problems by providing a load height detection system.

The invention is a load height detection system comprising a load space, a crane comprising multiple booms and a boom tip, a grapple tool adapted to handle cargo, being attached to the boom tip, being adapted to provide sensor data for open/close status, the crane adapted to detect a vertical slew angle, a rotational angle, at least a horizontal distance of the boom tip to the base of the crane and a height position of the boom tip relative to the load space, a controller adapted to receive the positioning data of the crane and the boom tip, the controller being adapted to interpret the data of the vertical slew angle, the rotational angle, the distance and the height data to identify if the boom tip is inside or outside the load space, and to identify a loading or an unloading operation by an increasing or decreasing boom tip height in the area of the load space at a final position, the final position being defined by an open/close status of the grapple tool, and determining a fully loaded or fully unloaded load space.

The system enables an automatic detection of a loading or unloading process. The boom tip is repeatedly moved outside the load space and inside the load space during operations. By recording a final position inside the load space before moving back outside the load space the controller is abled to determine a loading or unloading operation. The vehicle on which the system is installed is enabled to automatically transmit current operation data to the central production system so that the operator of the machine is relieved of manually providing such status messages. Further the production planer, usually situated off-site is able to follow the production process so that coordination efforts are greatly reduced. The production system is enabled to provide information and data about the machine status and the log processing status such as log placement and transport time. The production planer and the operator are thus experiencing less workload.

In another embodiment, a multiple of final positions can be recorded and the controller can be adapted to compare the multiple of final positions to identify a loading or an unloading operation, and indicating, when an uppermost or lowermost position is reached.

The system can estimate an increase or decrease in the multiple of final positions such as the height value of the final positions. By incremental increase or decrease the system is able to estimate a loading and unloading operation. By comparing the values of the final positions with the dimension settings of the load space the system can provide information to the operator and the production system about the current loading state.

In another embodiment, the final position can be a position where the boom tip stops and reverses the vertical direction, or where the grapple is actuated between an open or close state.

In case the boom tip revers movement is used to recognize a final position, the system is relying on less sensor input, being more durable and requiring less maintenance. In case the open/close state of the grapple is used, this provides a higher accuracy of the load detection, as compared to boom tip movement the indication is more specific. The boom tip can in some occasions move up and down during operations inside the load space, so that the open close state of the grapple provide more reliant data.

By another embodiment, the controller can be adapted to collect the data and provide information about the current loading state of the load space.

The real time transmission of the current operations provides a constant status to the production system by wireless communication. The operator and the production planer are enabled to have a constant overview of the production volume and the planning of further steps. The involved personal experiences a reduction of workload and is under reduced stress.

In a further embodiment, the measurement of the load space can be adaptable by the operator.

As modern forest machines also have an adaptable load space which can be extended in its dimensions, the operator can easily adapt the system to the changed load space characteristics. This enables a flexible work process, and the operator is supported in making the necessary changes to the load space and the system, so that the workload and stress of the operator is reduced.

In another embodiment, the final positions can be collected in a data table and the controller is adapted to identify the loading status in relation to the data input by an operator.

The system enables the operator to manually set a load space size or volume wherein the system uses this setting to identify a load height and a fully loaded or fully empty status of the load space and enables transmitting the information to the product planning system and/or planer work staff. This reduces workload on the operator and leads to an accurate estimate of current work and task conditions.

Another aspect of the invention is a method of detecting a load height of a load space comprising a load space, a crane comprising multiple booms and a boom tip, a grapple tool adapted to handle cargo, being attached to the boom tip, being adapted to provide sensor data for open/close status, the crane adapted to detect a vertical slew angle, a rotational angle, at least a horizontal distance of the boom tip to the base of the crane and a height position of the boom tip relative to the load space, a controller adapted to receive the positioning data of the crane and the boom tip, the controller being adapted to interpret the data of the vertical slew angle, the rotational angle, the distance and the height data to identify if the boom tip is inside or outside the load space, and to identify a loading or an unloading operation by an increasing or decreasing boom tip height in the area of the load space at a final position, the final position being defined by an open/close status of the grapple tool, and determining a fully loaded or fully unloaded load space.

The method enables an automatic detection of a loading or unloading process. The boom tip is repeatedly moved outside the load space and inside the load space during operations. By recording a final position inside the load space before moving back outside the load space the controller is abled to determine a loading or unloading operation. The vehicle on which the system is installed is enabled to automatically transmit current operation data to the central production system so that the operator of the machine is relieved of manually providing such status messages. Further the production planer, usually situated off-site is able to follow the production process so that coordination efforts are greatly reduced. The production system is enabled to provide information and data about the machine status and the log processing status such as log placement and transport time. The production planer and the operator are thus experiencing less workload.

In another embodiment, a multiple of final positions can be recorded and the controller can be adapted to compare the multiple of final positions to identify a loading or an unloading operation, and indicating, when an uppermost or lowermost position is reached.

The method can estimate an increase or decrease in the multiple of final positions such as the height value of the final positions. By incremental increase or decrease the system is able to estimate a loading and unloading operation. By comparing the values of the final positions with the dimension settings of the load space the system can provide information to the operator and the production system about the current loading state.

In another embodiment, the final position can be a position where the boom tip stops and reverses the vertical direction, or where the grapple is actuated between an open or close state.

In case the boom tip revers movement is used to recognize a final position, the system is relying on less sensor input, being more durable and requiring less maintenance. In case the open/close state of the grapple is used, this provides a higher accuracy of the load detection, as compared to boom tip movement the indication is more specific. The boom tip can in some occasions move up and down during operations inside the load space, so that the open close state of the grapple provide more reliant data.

In a further embodiment, the controller can be adapted to collect the data and provide information about the current loading state of the load space.

The real time transmission of the current operations provides a constant status to the production system by wireless communication. The operator and the production planer are enabled to have a constant overview of the production volume and the planning of further steps. The involved personal experiences a reduction of workload and is under reduced stress.

By another embodiment, the measurement of the load space can be adaptable by the operator.

As modern forest machines also have an adaptable load space which can be extended in its dimensions, the operator can easily adapt the system to the changed load space characteristics. This enables a flexible work process, and the operator is supported in making the necessary changes to the load space and the system, so that the workload and stress of the operator is reduced.

The inventions are further described in the following drawing wherein
Fig 1 shows a forestry vehicle being a forwarder for load operations in forest areas;
Fig 2 shows a view in a fore and aft direction of the load space or bunk of a forwarder;
Fig 3 depicts the load-unload operation by the system showing the incremental changes of the final positions;
Fig 4 shows the load space situation in a fully loaded state and the relative measurement by the system;
Fig 5 depicts a record table of the system, estimating a load level and a average load level.

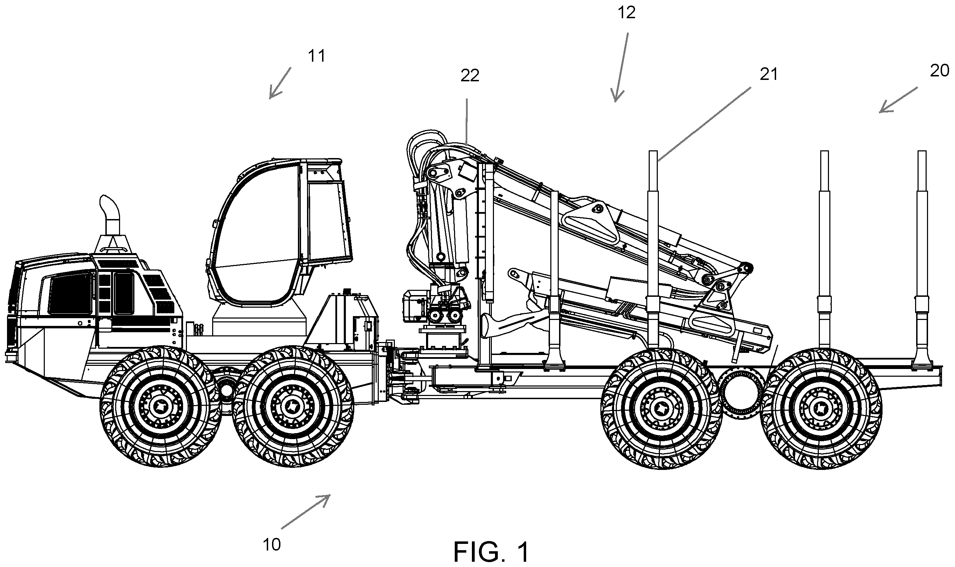

Fig.1 shows a forestry vehicle 10, especially a forwarder. This vehicle type is used to transport logs from the harvesting area to a road transport vehicle or loading station. The vehicle comprises a front chassis 11 and rear chassis 12. The rear chassis 12 usually carries a load space 20 or a load bunk. The load space 20 is surrounded by stakes 21 which ensure the placement of the logs. The load space 20 is loaded by a crane 22, usually comprising multiple booms and a extension boom with a load grapple to handle logs. The crane 22 is moved between the log pile and the load space 20 repeatedly to load the logs inside the load space 20. The crane 22 is usually controlled by hydraulic power but can also be actuated by electric motors or similar power. Depending on the size of the vehicle, the load space 20 or the logs, the crane 22 may have a higher or lower lift capacity. The operator controls the crane operation and visually controls the filing of the load space 20. The crane 22 may have multiple sensors so as to measure a slew angle, a horizontal and vertical position of the boom tip and a rotational angle relative to the length axis of the vehicle 10.

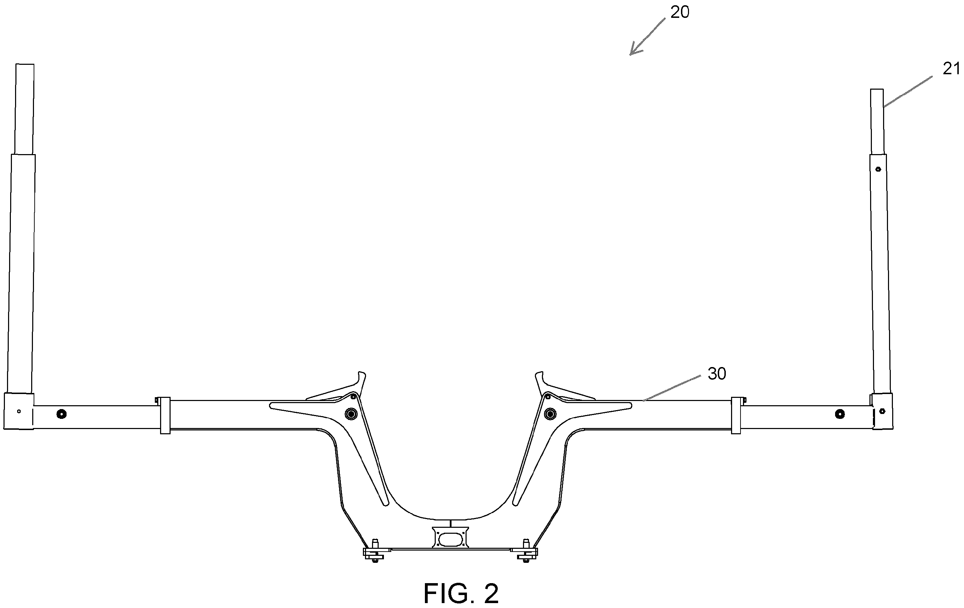

Figure 2 depicts a part view of the load space 20 showing a base 30 holding on each end the stakes 21 that surround the load space 20. During loading operation, the logs pile up inside the load space 20 until the load limit, either limited by weight or by load height is reached. The load height is usually limited by the highest position of the stake tips and the lateral extension of the load stakes 21. The load space 20 can thus be enlarged in the vertical and horizontal direction. The forestry vehicle 10 may provide a motorized option for extending the load space 20 by hydraulic or electric power, so that the operator can control the load space volume from the operator seat without leaving the cabin. The system can calculate the load space 20 by positioning sensors in the stakes 21 and base 30 so that the volume is constantly updated in case of changes, or the operator can manually input the new volume as a setting inside the system. Further, the operator can manually input the new intended volume of the load space 20 so that the system both changes the load space volume by actuating the relevant actuators and the system also at the same time adjusts the new volume for the calculation of the load situation.

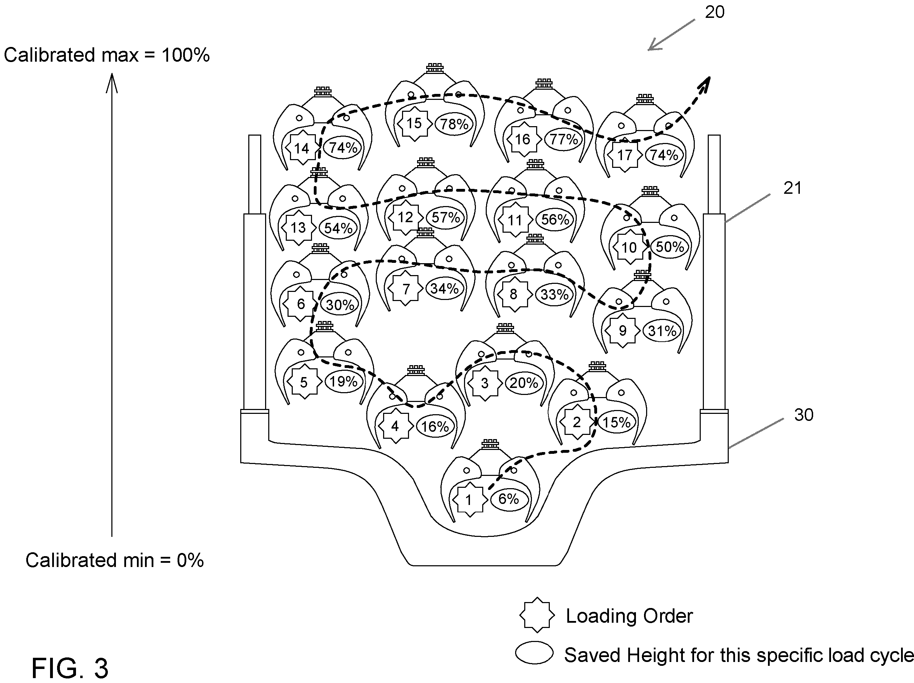

Figure 3 shows a view of the load space 20 and the stakes 21 in a loading or unloading situation. The lowest log is identified by the system as log 1. The system detects the lowest position of the grapple in a opening-closing situation which relates to the log being placed inside the load space 20 or being taken from the load space 20. The load space 20 or the crane 22 may comprise weight sensors which enable the system to detect the weight of the log. The system may also function without a weight sensor. The weight sensor data can also be used to verify a loading or unloading operation. This depends on the weight reduction inside the load space 20 together with the opening closing operation of the grapple. In any case, with or without the weight sensor, the opening closing operation of the grapple is counted as a first log placement and the height of the grapple position is recorded inside the system in a table.

The following movement of the crane 22 outside and inside the load space 20 in a second and different height position is saved next as a new final position inside the table. In case of the provision of a weight sensor the added weight is also saved in a table in the system.

During the loading operations the load space 20 will further be filled up with logs and the system recognized each new final position in the related look up table. The look up table will contain the complete set of final positions and is enable to count the load steps relating each to a different log and will automatically update the production team data via communication or computer device so that the operator is relieved of manual input in the system.

Once the system detects a final position matching the maximum available load space 20 the system will automatically set the load space 20 status to fully loaded and update the production team data accordingly. Further, the system may inform the operator that the load space 20 is in fully loaded state so that further load operation may cease at this time.

In case of an unloading operation the system works similarly. The new final positions will decrease in their height inside the load space 20 and the system automatically updates the production team data set. Similarly, this also applies for the fully unloaded state.

In case the system comprises a weight sensor, the system can alert the operator when a fully loaded state in regard to weight restrictions is reached. Also, the system may use the weight data to update the production team data set for the log weight and thus improve calculability fo the processed log amount and weight.

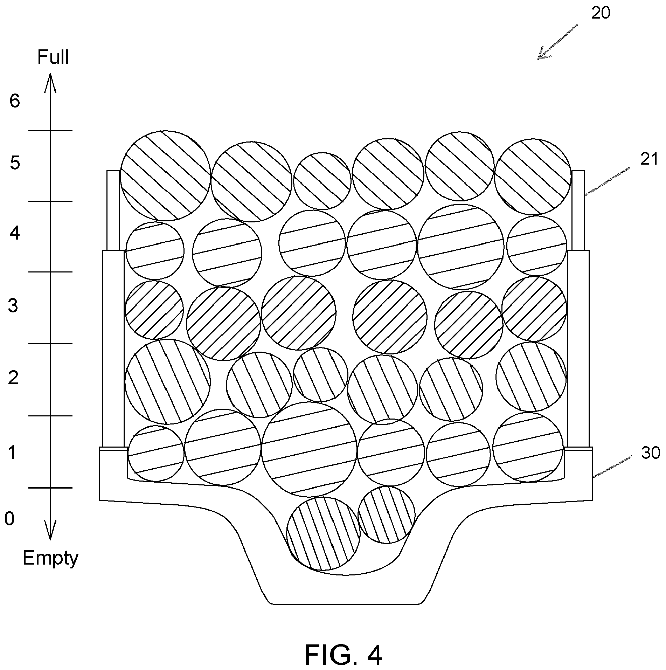

Figure 4 shows an exemplary height model for the system, where the load height is categorized in a scale shown on the left side. This scale may be only for referential purpose or may reflect the level of log layers placed in the load space 20. The system may categorize the final positions as being in a certain level of the load height and may determine if a final load height level for a fully load state is reached.

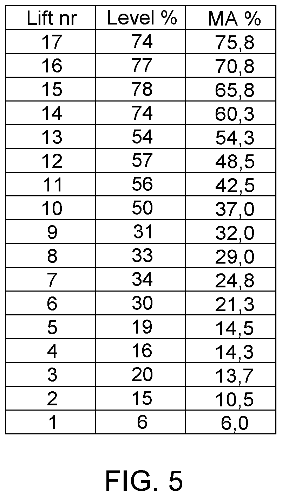

Figure 5 depicts an example of a look up table of the system. The system detects the number of load operations or load lifts and records each set in the table. For each final position inside the load space 20 the load height and or the load weight is recorded. The system may verify the current loading operation by calculating if the height or weight is increasing or decreasing. For each loading operation, an average value is calculated either for the height value or the weight value. With this method the system is able to constantly track the current operation and evaluate the increase or decrease of the final positions and also to calculate the limit of the load space 20, either by relying on the height value of the final positions or the load weight.

The system and the method work in summary as follows. At first, the system detects the open or close movement of the grapple inside the load space 20. For this purpose, a specific positioning sensor may be provided, but is not mandatory. The open close command above a certain height level is sufficient inside a positioning window or border limit. The height position of the open-close position is recorded in a table. The operator repeats the loading process and a new final position in the moment of open-close movement is detected and recorded. These steps will repeat during the loading or unloading process. When a new final position is detected that corresponds to the limit of the load space 20, the system detects a fully loaded status. During the ongoing loading process the system provides a constant data flow via communication devices to the operation center with the production team. Upon reaching fully loaded status the information is also updated via a communications link. The operation center and the planning office is enable to keep track of current loading and estimated log production and transport.

## Claims

**1.** Load height detection system comprising
a load space (20)
a crane (22) comprising multiple booms and a boom tip
a grapple tool adapted to handle cargo, being attached to the boom tip, being adapted to provide sensor data for open/close status,
the crane (22) adapted to detect a vertical slew angle, a rotational angle, at least a horizontal distance of the boom tip to the base of the crane (22) and a height position of the boom tip relative to the load space (20),
a controller adapted to receive the positioning data of the crane (22) and the boom tip,
the controller being adapted to interpret the data of the vertical slew angle, the rotational angle, the distance and the height data to identify if the boom tip is inside or outside the load space (20), and to identify a loading or an unloading operation by an increasing or decreasing boom tip height in the area of the load space (20) at a final position,
the final position being defined by an open/close status of the grapple tool,
and determining a fully loaded or fully unloaded load space (20).

**2.** System of claim 1, wherein a multiple of final positions are recorded and the controller is adapted to compare the multiple of final positions to identify a loading or an unloading operation, and indicating, when an uppermost or lowermost position is reached.

**3.** System of claim 1 or 2, wherein the final position being a position where the boom tip stops and reverses the vertical direction, or where the grapple is actuated between an open or close state.

**4.** System of any previous claim, where the controller is adapted to collect the data and provide information about the current loading state of the load space (20).

**6.** System of any previous claim, where the measurement of the load space (20) is adaptable by the operator.

**7.** System of any previous claim, wherein the final positions are collected in a data table and the controller is adapted to identify the loading status in relation to the data input by an operator.

**8.** Method of detecting a load height of a load space (20) comprising
a load space (20)
a crane (22) comprising multiple booms and a boom tip
a grapple tool adapted to handle cargo, being attached to the boom tip, being adapted to provide sensor data for open/close status,
the crane (22) adapted to detect a vertical slew angle, a rotational angle, at least a horizontal distance of the boom tip to the base of the crane (22) and a height position of the boom tip relative to the load space (20),
a controller adapted to receive the positioning data of the crane (22) and the boom tip,
the controller being adapted to interpret the data of the vertical slew angle, the rotational angle, the distance and the height data to identify if the boom tip is inside or outside the load space (20), and to identify a loading or an unloading operation by an increasing or decreasing boom tip height in the area of the load space (20) at a final position,
the final position being defined by an open/close status of the grapple tool,
and determining a fully loaded or fully unloaded load space (20).

**9.** Method of claim 8, wherein a multiple of final positions are recorded and the controller is adapted to compare the multiple of final positions to identify a loading or an unloading operation, and indicating, when an uppermost or lowermost position is reached.

**10.** Method of detecting a load height of claim 8 or 9, wherein the final position being a position where the boom tip stops and reverses the vertical direction, or where the grapple is actuated between an open or close state.

**11.** Method of detecting a load height of any previous claim, where the controller is adapted to collect the data and provide information about the current loading state of the load space (20).

**12.** Method of detecting a load height of any previous claim, where the measurement of the load space (20) is adaptable by the operator.
